# EUROPEAN PATENT APPLICATION

(11) **EP 4 016 934 A1**
(43) Date of publication of application: **22.06.2022**
(21) Application number: 20881876.5
(22) Date of filing: 28.09.2020
(51) Int. Cl.: H04L 12/24, H04L 12/28

(54) **METHOD AND APPARATUS FOR REALIZING MULTI-AP NETWORK NETWORKING, AND WIRELESS ACCESS POINT**

(30) Priority: 29.10.2019 CN 201911035724
(71) Applicant: ZTE Corporation, Shenzhen, Guangdong 518057 (CN)
(72) Inventor: BAO, Yong, Nanjing, Jiangsu 210012 (CN); LIU, Xinying, Nanjing, Jiangsu 210012 (CN); LU, Bo, Nanjing, Jiangsu 210012 (CN)
(74) Representative: WBH Wachenhausen Patentanwälte PartG mbB
(86) International application number: PCT/CN2020/118517
(87) International publication number: WO 2021/082848

(57) **Abstract**

Provided in the embodiments of the present application are a method and apparatus for realizing multi-AP network networking, and a wireless access point. In the embodiments of the present application, a network optimization process is brought forward to a networking process, thus suppressing networking oscillation of a multi-AP network arising from networking optimization, and a loop formed in an AP networking process is also effectively prevented, thereby improving the stability of multi-AP network networking.

## Description

### TECHNICAL FIELD

The present application relates to, but is not limited to, wireless network technologies, and in particular, to a method and apparatus for realizing a multi-AP network networking and a wireless access point.

### BACKGROUND

With the popularity of mobile terminals, users have increasingly higher requirements for signal coverage of access points (APs) and roaming time slots between APs. On this basis, the multiple APs (Multi-AP) technology also has a great development.

There are many modes of networking between APs. Considering cost and compatibility, the most common mode of networking is to utilize the indoor existing Ethernet and wireless signals of the AP. Although wireless networking is flexible, an oscillation of a network is easy to be caused by the optimization of the network after being networked, and the whole network might be not available due to the formation of a loop in the re-networking process. Moreover, in case that the backhaul channel and the overlay channel are in the same frequency band, the bandwidth of the overlay network will be occupied, thereby affecting the transmission efficiency of the network, which in turn reduces the stability of the multi-AP network networking.

### SUMMARY

According to some embodiments of the present application, a method and an apparatus for realizing a multi-AP network networking, and a wireless access point, are provided which are capable of improving the stability of the multi-AP network networking.

According to some embodiments of the present application, a method for realizing a multi-AP network networking is provided, including:
determining, by an AP, according to default hierarchical information of the AP and signal feature information of a target AP, an accessing AP, and accessing the accessing AP;
acquiring, by the AP, network topology information, and obtaining hierarchical information of an access channel of the AP according to the acquired network topology information; and
determining, by the AP, that the access channel and the backhaul channel of the AP affect each other, and performing deferred processing on the obtained hierarchical information of the access channel.

In an example, the signal feature information includes signal strength, and determining the accessing AP and accessing the accessing AP includes:
checking, by the AP, hierarchical information of the target AP, through a detection mechanism or a monitoring mechanism; and in response to the hierarchical information of the target AP being higher than the default hierarchical information of the AP, taking the target AP as a candidate AP; and
in response to there being only one candidate AP, taking, by the AP, the candidate AP as the accessing AP, and accessing the accessing AP; and in response to there being multiple candidate APs, selecting, by the AP, the accessing AP according the signal strength and hierarchical information of the candidate APs, and accessing the accessing AP.

In an example, the obtaining hierarchical information of the access channel of the AP according to the acquired network topology information, includes:
in response to the AP being a root AP, determining that the hierarchical information of the access channel of the AP is of the highest systematic hierarchy; and in response to the AP being a sub-AP, finding an uplink AP of the AP according to the network topology information, where hierarchy information of an access channel of the uplink AP corresponding to the backhaul channel of the AP determines the hierarchical information of the access channel of the AP.

In an example, the performing deferred processing on the obtained hierarchical information of the access channel, includes:
taking next hierarchical information of the obtained hierarchical information of the access channel as the hierarchical information of the access channel of the AP.

In an example, in response to the access channel and the backhaul channel of the AP not affecting each other, the obtained hierarchical information of the access channel of the AP is the hierarchical information of the access channel of the AP.

According to some embodiments of the present application, further provided is a computer-readable storage medium storing computer-executable instructions which, when executed by a processor, cause the processor to carry out any one of the above-mentioned methods for realizing a multi-AP network networking.

According to some embodiments of the application, an apparatus for realizing a multi-AP network networking is further provided, including a processor; and a memory storing a computer program which, when executed by the processor, causes the processor to perform the steps of any one of the above-mentioned methods for realizing a multi-AP network networking.

According to some embodiments of the application, an apparatus for realizing a multi-AP network networking is further provided, including an access module, an acquisition module and a processing module.

The access module is configured to determine, according to default hierarchical information of the access module and signal feature information of a target AP, an accessing AP, and access the accessing AP.

The acquisition module is configured to acquire network topology information, and obtain hierarchical information of an access channel of a device to which the acquisition module belongs itself according to the acquired network topology information.

The processing module is configured to determine that an access channel and a backhaul channel of a device to which the processing module belongs affect each other, and perform deferred processing on the obtained hierarchical information of the access channel.

In an example, the acquisition module is configured to:
in response to the device to which the acquisition module belongs being a root AP, determine that the hierarchical information of the access channel of the device to which the acquisition module belongs is of the highest systematic hierarchy; and in response to the device to which the acquisition module belongs being a sub-AP, find an uplink AP of the device to which the acquisition module belongs according to the network topology information, where the hierarchical information of the uplink AP corresponding to the backhaul channel of the device to which the acquisition module belongs determines the hierarchical information of the access channel of the device to which the acquisition module belongs.

According to some embodiments of the application, an access point is further provided, including any one of the above-mentioned apparatuses for realizing a multi-AP network networking.

With the embodiments of the application, the network optimization process is advanced to the networking process, which inhibits the networking oscillation of the multi-AP network due to optimization of networking, and effectively prevents a loop from being formed in the AP networking process, thereby improving the stability of the multi-AP network networking. Moreover, in some embodiments of the application, after an AP accesses a multi-AP network, the hierarchical information of the AP is adjusted in time, thus providing a preferential option for the AP to be accessed

Additional features and advantages of the embodiments of the application will be set forth in the description which follows, and in part will be obvious from the description, or can be learned by the practice of the application. The objects and other advantages of the present application can be realized and obtained by the structures particularly pointed out in the description, claims and drawings.

### BRIEF DESCRIPTION OF DRAWINGS

The drawings are provided for a further understanding of the technical schemes of the present application, and constitute a part of the description, and together with the embodiments of the present application, are used to illustrate the technical schemes of the present application, and do not constitute a limitation on the technical schemes of the present application.
FIG. 1 is a schematic diagram of an embodiment of a multi-AP networking;
FIG. 2 is a schematic diagram of an embodiment of networking in a wireless backhaul mode in a multi-AP networking;
FIG. 3 is a schematic diagram of an embodiment of re-networking occurring in a multi-AP network;
FIG. 4 is a flowchart of a method for realizing a multi-AP network networking according to an embodiment of the application;
FIG. 5 is a schematic diagram of an embodiment of realizing a multi-AP network networking according to an embodiment of the application; and
FIG. 6 is a schematic structural diagram of an apparatus for realizing a multi-AP network networking according to an embodiment of the application.

### DETAILED DESCRIPTION

In a typical configuration of embodiments of the present application, a computing device includes one or more processors (CPUs), an input/output interface, a network interface, and a memory.

The memory may include a computer-readable medium such as a non-persistent memory, a random access memory (RAM), and/or a non-volatile memory, for example a read-only memory (ROM) or a flash RAM. The memory is an example of the computer-readable medium.

The computer-readable media includes permanent and non-permanent media, removable and non-removable media that can realize the storage of information by means of any method or technology. The information may be computer-readable instructions, data structures, modules of a program, or other data. Examples of storage media of a computer include, but are not limited to, Phase Change Random Access Memory (PRAM), Static Random Access Memory (SRAM), Dynamic Random Access Memory (DRAM), other types of Random Access Memory (RAM), Read Only Memory (ROM), Electrically Erasable Programmable Read Only Memory (EEPROM), Flash Memory or other memory technology, Compact Disc Read-Only Memory (CD-ROM), Digital Versatile Disc (DVD) or other optical storage, magnetic cassettes, magnetic tape disk storage or other magnetic storage devices, or any other non-transmission medium, which can be used to store information that can be accessed by a computing device. According to the definition in the embodiments of this application, a computer-readable medium does not include transitory media such as a modulated data signal and a carrier.

In order to make the objectives, technical schemes and advantages of the embodiments of the present application clear, the embodiments of the present application will be described in detail below with reference to the accompanying drawings. It should be noted that, if not in collision, the embodiments in the present application and the features in the embodiments can be arbitrarily combined with each other.

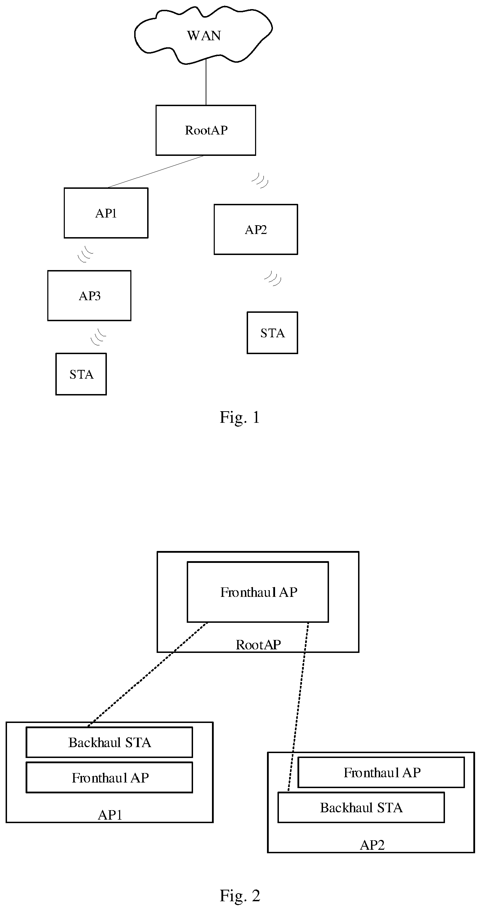

FIG. 1 is a schematic diagram of an embodiment of a multi-AP networking. As shown in FIG. 1, it is assumed that a root AP (RootAP) can access a wide area network (WAN). The RootAP may be a passive optical network (PON) gateway or a digital subscriber line (DSL) gateway supporting an AP function, or may be a combination of a common gateway and a router supporting an AP function that are connected with each other through a wire. In this embodiment, an AP1 accesses the RootAP via an Ethernet link, and an AP3 accesses the AP1 via a wireless link, and an AP2 directly accesses the RootAP via a wireless link. The four APs form a multi-AP wireless network with a much larger coverage area than that of a single AP. FIG. 1 is merely an example of a more common mode of networking, and is not used to limit an actual mode of multi-AP networking. FIG. 2 shows a schematic diagram of an embodiment of multi-AP networking adopting a wireless backhaul mode. In the embodiment shown in FIG. 2, the RootAP includes an overlay module (Fronthaul AP) to provide an overlay network. The AP1 and the AP2 both include a backhaul module (Backhaul STA) and an overlay module which has the same function as the overlay module in the RootAP. In order to facilitate the roaming of the STA, the network names of AP1 and AP2 are usually set to be consistent with the RootAP. The backhaul modules of AP1 and AP2 are configured to access the overlay module of the RootAP to transmit back data of the overlay network of the present AP. The backhaul modules and the overlay modules may use the same or different wireless frequency bands.

A beacon announcement mechanism of an AP and a detection mechanism for a station (STA) to find a surrounding AP are defined in related protocols, that is, the AP can periodically declare its own various capabilities in a beacon message, while the STA can complete the detection of the surrounding AP by actively sending a probe_request message and receiving a probe_response message responded by the AP, or directly monitoring the beacon message of the AP. A topology discovery mechanism is further defined in the related protocols, and the AP may discover other devices supporting the 1905 protocol in the multi-AP network through the topology discovery mechanism, and the type of various interfaces of the devices.

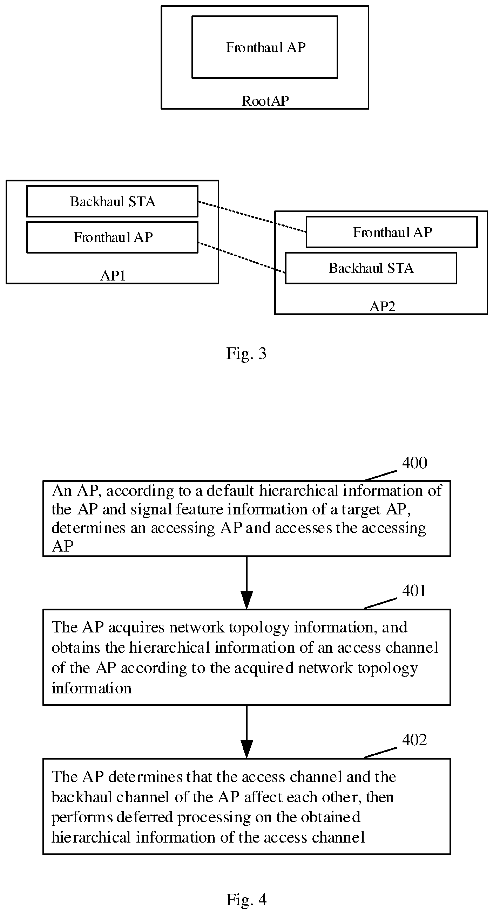

As shown in FIG. 2, the AP1 and the AP2 are respectively connected to the overlay module of the RootAP, and respectively start their own overlay module for STA to access. In some scenarios, for example, the RootAP switches channel or the overlay module of the RootAP is unexpectedly shut down, etc. According to the existing technology, as shown in FIG. 3, the backhaul module of the AP1 will re-access the overlay network of the AP2 under the automatic association mechanism. Similarly, the backhaul module of the AP2 will also access the overlay network of the AP1. In this way, a loop can be formed, resulting in a network storm. It is merely a simple example. The actual networking is more complex, and there may be cases where two or more APs are connected in series to form a loop or a wired backhaul AP may be in the loop.

For this purpose, a method for realizing a multi-AP network networking is provided according to an embodiment of the application, as shown in FIG. 4, including steps S401 to S403.

At step S400, an AP, according to default hierarchical information of the AP and signal feature information of a target AP, determines an accessing AP and accesses the accessing AP.

Prior to Step S400, the method further includes a step that the AP can discover surrounding APs through the detection mechanism and find the target AP matched with the AP, and the matching condition may include having the same service set identifier (SSID).

The default hierarchical information shows a default lowest hierarchy.

In an example, taking the signal feature information including signal strength as an example, the determining an accessing AP and accessing the accessing AP in step S400 include: checking, by the AP, the hierarchical information of the target AP through a detection mechanism or a monitoring mechanism, for example, the AP checking hierarchical information in a probe response message responded by the target AP or directly monitoring the beacon message of the target AP to obtain the hierarchical information therein; if the hierarchical information of the target AP has a higher level than the default hierarchical information of the AP, taking the target AP as a candidate AP; if there is only one candidate AP, directly taking, by the AP, the candidate AP as the accessing AP and accesses the accessing AP; and if there are multiple candidate APs, the AP can optionally select the accessing AP according to the signal strength (such as RSSI) and hierarchical information of the candidate APs, and access the accessing AP.

In an example, when the accessing AP is selected optionally according to the signal strength (e.g., RSSI) and hierarchical information of the candidate AP, these two factors of the signal strength and hierarchical information may be assigned with weights.

In an example, if there is no candidate AP, the scan of current network continues.

At step S401, an AP acquires network topology information, and obtains the hierarchical information of an access channel of the AP according to the acquired network topology information.

In an example, an AP may acquire the network topology information of an accessed network through a topology discovery mechanism.

In an example, the obtaining the hierarchical information of an access channel of the AP according to the acquired network topology information, includes the following steps of: if the AP is a RootAP, determining that the hierarchical information of the access channel of the AP is of the highest systematic hierarchy; if the AP is a sub-AP, that is, there is a target AP among target APs whose hierarchical information has a higher level than the default hierarchical information of the AP, finding an uplink AP of the AP according to the network topology information, and obtaining the hierarchical information of the access channel of the uplink AP corresponding to the backhaul channel of the AP, where the hierarchical information is the hierarchical information of the access channel of the AP.

At Step S402, the AP determines that the access channel and the backhaul channel of the AP affect each other, and performs deferred processing on the obtained hierarchical information of the access channel.

In an example, the step S402 may include the following steps.

The AP judges whether the access channel and the backhaul channel of the AP affect each other, and if the access channel and the backhaul channel are of a same medium and affect each other, it is indicated that there is mutual influence.

If the access channel and the backhaul channel of the AP do not affect each other, for example, for a wired channel, the original hierarchical information (i.e., the hierarchical information of the access channel obtained in step S401) is directly adopted; and if the access channel and the backhaul channel of the AP affect each other, the hierarchical information which is next hierarchical information of the hierarchical information of the access channel obtained in step 401 is adopted.

According to the embodiment of the application, the network optimization process is advanced to the networking process, which inhibits the networking oscillation of the multi-AP network due to optimization of networking, and effectively prevents the loop from being formed in the AP networking process, thereby improving the stability of the multi-AP network networking. Moreover, in some embodiments of the application, after an AP accesses a multi-AP network, the hierarchical information of the AP is adjusted in time, thus providing a preferential option for the AP to be accessed.

In an example, the embodiment of the application further include a step that the AP announces the hierarchical information of the AP through a beacon announcement mechanism.

According to an embodiment of the application, a computer readable storage medium is further provided, storing computer executable instructions which, when executed by a processor, cause the processor to carry out any one of the above mentioned methods for realizing a multi-AP network networking.

An embodiment of the application may further provide a device for realizing a multi-AP network networking, including a processor and a memory storing a computer program which, when executed by the processor, causes the processor to perform the steps of any one of the above-mentioned methods for realizing a multi-AP network networking.

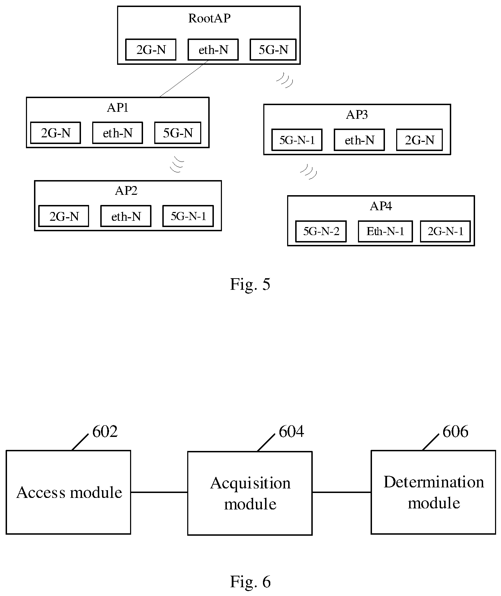

FIG. 5 is a schematic diagram of an embodiment of realizing a multi-AP network networking according to an embodiment of the application. As shown in FIG. 5, in the embodiment, it is assumed that a total depth of hierarchy of a wireless network is controlled by a RootAP, for example, a maximum hierarchy is defined as N. With the method for realizing a multi-AP networking according to an embodiment of the present application, the AP1 directly connects the RootAP via an Ethernet link, and the hierarchies of 2G and 5G access channels of the AP1 are still N. The AP2 access the AP1 via 5G, and the hierarchy of the 5G access channel of the AP2 is N-1, and the hierarchy of the 2G access channel of the AP2 is N. The AP3 accesses the RootAP via a 5G backhaul link, and the hierarchy of the 5G access channel of the AP3 is N-1. The AP4 also accesses the AP3 via the 5G backhaul link, and the hierarchy of the 5G access channel of the AP4 is N-2.

FIG. 6 is a schematic structural diagram of an apparatus for realizing a multi-AP network networking according to some embodiments of the application. As shown in FIG. 6, the apparatus at least includes: an access module, an acquisition module, and a processing module.

The access module 602 is configured to determine, according to the default hierarchical information of the access module 602 and signal feature information of a target AP, an accessing AP and access the accessing AP.

The acquisition module 604 is configured to acquire network topology information, and obtain, according to the acquired network topology information, hierarchical information of an access channel of the above-mentioned device to which the acquisition module 604 belongs.

The processing module 606 is configured to determine that the access channel and backhaul channel of the device to which the processing module belongs affect each other, and perform deferred processing on the obtained hierarchical information of the access channel.

In an example, the access module is configured to: check the hierarchical information of the target AP through a detection mechanism or a monitoring mechanism, for example, check the hierarchical information in a probe response message responded by the target AP or directly monitor a beacon message of the target AP to obtain the hierarchical information therein; if the hierarchical information of the target AP has a higher level than the default hierarchical information of the device to which the access module belongs, take the target AP as a candidate AP; and if there is only one candidate AP, directly take, by the AP, the candidate AP as the accessing AP and accesses the accessing AP; and if there are multiple candidate APs, select, by the AP, the accessing AP according to the signal characteristic information (such as RSSI, etc.) and hierarchical information of the candidate AP, and accesses the accessing AP.

In an example, the acquisition module is configured to: if the device to which the acquisition module belongs is a RootAP, determine that the hierarchical information of the access channel of the device to which the acquisition module belongs is of the highest systematic hierarchy; and if the device to which the acquisition module belongs is a sub-AP, that is, there is a target AP among target APs whose hierarchical information is higher than the default hierarchical information of the device to which the acquisition module belongs, firstly find an uplink AP of the device to which the acquisition module belongs according to the network topology information, and acquire the hierarchical information of an access channel of the uplink AP corresponding to the backhaul channel of the device to which the acquisition module belongs, where the hierarchical information is the hierarchical information of the access channel of the device to which the acquisition module belongs.

In an example, the processing module is configured to: judge, by the device to which the processing module belongs, whether the access channel and the backhaul channel of the AP affect each other, and indicate that there is mutual influence if the access channel and the backhaul channel are of the same medium and affect each other.

If the access channel and the backhaul channel of the device to which the processing module belongs do not affect each other, for example, for a wired channel, the original hierarchical information is directly adopted, that is, the hierarchical information of the access channel obtained in the acquisition module. If the access channel and the backhaul channel of the device to which the processing module belongs affect each other, the next hierarchical information of the original hierarchical information which is the hierarchical information of the access channel obtained in the acquisition module is adopted.

The embodiments of the present application further provide an AP, including any one of the above-mentioned apparatus for realizing a multi-AP network networking.

The above are merely preferred examples of the embodiments of the present application, and are not intended to limit the scope of protection of the present application. Any modification, equivalent replacement, improvement made within the principle of the embodiments of the present application shall fall within the protection scope of the present application.

### INDUSTRIAL APPLICABILITY

The network optimization process is performed in advanced in the networking process, which inhibits the networking oscillation of the multi-AP network due to the optimization of networking, and effectively prevents a loop from being formed in the AP networking process, thereby improving the stability of the multi-AP network networking. Moreover, after the AP accesses the multi-AP network, the hierarchical information of the AP is adjusted in time, providing a preferential option for the AP to be accessed.

## Claims

1. A method for realizing a multi-AP network networking, comprising:
determining, by an AP, according to default hierarchical information of the AP and signal feature information of a target AP, an accessing AP, and accessing the accessing AP;
acquiring, by the AP, network topology information, and obtaining hierarchical information of an access channel of the AP according to the acquired network topology information; and
determining, by the AP, that the access channel and a backhaul channel of the AP affect each other, and performing deferred processing on the obtained hierarchical information of the access channel.

2. The method of claim 1, wherein the signal feature information comprises signal strength, and determining the accessing AP and accessing the accessing AP comprises:
checking, by the AP, hierarchical information of the target AP, through a detection mechanism or a monitoring mechanism; in response to the hierarchical information of the target AP having a higher level than the default hierarchical information of the AP, taking the target AP as a candidate AP; and
in response to there being only one candidate AP, taking, by the AP, the candidate AP as the accessing AP, and accessing the accessing AP; and in response to there being multiple candidate APs, selecting, by the AP, the accessing AP according the signal strength and hierarchical information of the candidate APs, and accessing the accessing AP.

3. The method of claim 1, wherein the obtaining the hierarchical information of the access channel of the AP according to the acquired network topology information, comprises:
in response to the AP being a root AP, determining that the hierarchical information of the access channel of the AP is of the highest systematic hierarchy; and in response to the AP being a sub-AP, finding an uplink AP of the AP according to the network topology information, wherein hierarchy information of an access channel of the uplink AP corresponding to the backhaul channel of the AP determines the hierarchical information of the access channel of the AP.

4. The method of claim 1, wherein the performing deferred processing on the obtained hierarchical information of the access channel, comprises:
taking next hierarchical information of the obtained hierarchical information of the access channel as the hierarchical information of the access channel of the AP.

5. The method of claim 1, wherein in response to the access channel and backhaul channel of the AP not affecting each other, the obtained hierarchical information of the access channel of the AP is the hierarchical information of the access channel of the AP.

6. A computer-readable storage medium storing computer-executable instructions which, when executed by a processor, causes the processor to carry out the method for realizing a multi-AP network networking of any one of claims 1 to 5.

7. An apparatus for realizing a multi-AP network networking, comprising:
a processor; and
a memory storing a computer program which, when executed by the processor, causes the processor to perform the steps of the method for realizing a multi-AP network networking of any one of claims 1 to 5.

8. An apparatus for realizing a multi-AP network networking, comprising an access module, an acquisition module and a processing module, wherein:
the access module is configured to determine, according to default hierarchical information of the access module and signal feature information of a target AP, an accessing AP, and access the accessing AP;
the acquisition module is configured to acquire network topology information, and obtain hierarchical information of an access channel of a device to which the acquisition module belongs according to the acquired network topology information; and
the processing module is configured to determine that an access channel and a backhaul channel of a device to which the processing module belongs affect each other, and perform deferred processing on the obtained hierarchical information of the access channel.

9. The apparatus of claim 8, wherein the acquisition module is configured to:
in response to the device to which the acquisition module belongs being a root AP, determine that the hierarchical information of the access channel of the device to which the acquisition module belongs is of the highest systematic hierarchy; in response to the device to which the acquisition module belongs being a sub-AP, find an uplink AP of the device to which the acquisition module belongs according to the network topology information, wherein the hierarchical information of the uplink AP corresponding to the backhaul channel of the device to which the acquisition module belongs determines the hierarchical information of the access channel of the device to which the acquisition module belongs.

10. An access point, comprising the apparatus of any one of claims 8 and 9.
